# EUROPEAN PATENT APPLICATION

(11) **EP 2 522 944 A1**
(43) Date of publication of application: **14.11.2012**
(21) Application number: 12159353.7
(22) Date of filing: 14.03.2012
(51) Int. Cl.: F41G 3/16, F41G 3/22, F41G 5/16, G01C 25/00, G01C 19/5719, F41H 5/26, F41G 3/32, F41G 5/26

(54) **STABILIZATION PLATFORM**

(30) Priority: 10.05.2011 US 201113104354
(71) Applicant: Kongsberg Defence & Aerospace AS, 3601 Kongsberg (NO)
(72) Inventor: Hemmingsen, Fred, N-3612 Kongsberg (NO)
(74) Representative: Onsagers AS

(57) **Abstract**

Method and system for providing precise stabilization of a supporting structure for supporting at least one device used for aiming while the supporting structure is moving. MEMS gyroscope is employed for providing stabilization signals to driving means connected to said supporting structure for continuous stabilization adjustments of movements of the supporting structure.

## Description

The present invention comprises a stabilization platform. More specifically the invention is described by a stabilization platform for a supporting structure for supporting at least one device used for aiming while the supporting structure is moving.

### Background

When performing aiming with a device mounted on a moving support structure, e.g. a support structure mounted on a moving vehicle there is a need for providing continuous stabilization of the aiming device. Stable platforms are essential in order to keep the position and the aim locked on a target even when the supporting structure is vigorously moved. Different kinds of systems for stabilization are used today for controlling a supporting structure or platform where an aiming device is mounted. Such systems are based on different technical principles and complexity.

An aiming device is a device intended for pointing and keeping stable aim at a target. It can be a camera, direction sensitive sensors such as a directive microphone or heat sensor. It can also be a weapon.

In the following disclosure the described example of an aiming device is a weapon. The present invention is however not restricted to weapons or weapon systems. A man skilled in the art will realize that the invention will apply to all kind of devices used for aiming.

US-5,949,015 describes a weapon control system which includes system electronics providing control and drive electronics for the weapon control system, a weapon mount for supporting and firing a weapon in accordance with commands from system electronics, a remote control including a visual display and hand controls for operational control of the weapon control system from a position distant from said weapon mount, and a system disconnect for removal of control of the weapon from the weapon control system and for safety interlock to prevent accidental firing of the weapon. The weapon mount is adapted to support and fire a variety of weapons. A gyro stabilization assembly based on a fiber optic gyroscope (FOG) is mounted on the weapon mount and operatively connected to the remote control and the system electronics for allowing line-of-sight weapon and integral sight stabilization.

FOG is a gyroscope that uses the interference of light to detect mechanical rotation. It is based on the principle of conservation of angular momentum. The sensor consists of a coil of as much as 5 km of optical fiber. Two light beams travel along the fiber in opposite directions. Due to the Sagnac effect, the beam travelling against the rotation experiences a slightly shorter path than the other beam. The resulting phase shift affects how the beams interfere with each other when they are combined. The intensity of the combined beam then depends on the angular frequency of the device, thus the tilting of the coil.

Even if the FOG stabilization system is functioning well, it has several drawbacks.

In order to measure tilting in all three directions, three sensors with optical cables must be used, i.e. as much as up to 15km of optical fiber will be used. This makes it quite expensive and voluminous. The availability is also limited.

The present invention is based on MEMS gyroscopes. The abbreviation MEMS stands for Micro-Electro-Mechanical Systems, and is the integration of mechanical elements, sensors, actuators, and electronics on a common silicon substrate through micro fabrication technology. The mechanical elements can be miniature versions of tuning forks, vibrating wheels, or resonant solids of various designs. The electronics are fabricated using integrated circuit process sequences (e.g., CMOS), and the micromechanical components are fabricated using compatible micromachining processes that selectively etch away parts of the silicon wafer or add new structural layers to form the mechanical and electromechanical devices.

MEMS are inexpensive and widely available. These are packaged similarly to other integrated circuits and may provide either analog or digital outputs. In many cases, a single chip includes gyroscopic sensors for multiple axes. Some parts incorporate both a gyroscope and an accelerometer, in which case the output has six full degrees of freedom.

### Summary of the invention

The present invention is described by a method for providing precise stabilization of a supporting structure for supporting at least one device used for aiming while the supporting structure is moving. The method comprises the following steps:
- using MEMS gyroscope for providing stabilization signals to driving means connected to said supporting structure for continuous stabilization adjustments in at least one direction of movement of the supporting structure;
- resetting said gyroscope before operation for establishing a measure for initial drift in the gyroscope in its current operating environment, where the resetting comprises registering current temperature and drift in degrees in the at least one direction as a function of time, and
- using said initial drift for continuous calibration of the driving means for controlling said stabilization of the supporting structure.

Further inventive features are defined in the dependent claims in the enclosed set of claims.

The invention is also described by a system with means for doing the same.

### Detailed description

The present invention has been developed due to the need for inexpensive yet reliable stabilization of moving supporting structures for devices used for aiming, e.g. weapon which is used an example in the following description of the invention.

The applicant has found that MEMS technology can be used for precise stabilization of a supporting structure for weapons while firing and moving such. Specific measures must however be taken in order to employ this technology, and at the same time provide a precise stabilization.

The present invention is described by a method for providing precise stabilization of a supporting structure for weapons while firing and moving such. The method comprises several steps.

The first step is to use MEMS gyroscope for providing stabilization signals to driving means connected to the supporting structure for continuous stabilization adjustments of displacement in at least one direction of the supporting structure, i.e. tilting and elevation displacement. Position signals representing angular displacement relative to a target is provided, i.e. azimuth and elevation. The principle of the MEMS gyroscope is explained in the background above.

Adjustment in one direction only, is applicable for stabilization structure used for providing devices with a stable aim in only one direction, e.g. keeping the aim at a target when moving along an essentially horizontal road. However, typically two or three directions will be more commonly used. Note that the meaning of displacement in a direction includes displacement relative to a reference in the spherical coordinate system.

The driving means comprises electronics connected to fast responsive motors. The motors are connected to the supporting structure for providing fast stabilization of movement in several directions, e.g. yaw, roll and pitch.

The next step in the method is to manually resetting said gyroscope before operation for establishing values for initial drift in the gyroscope in its current operating environment, where the resetting comprises registering current temperature and drift in degrees in the three directions as a function of time. The amount of drift may be influenced by temperature and pressure.

The last step is to use said values for initial drift for continuous calibration of the driving means for controlling said stabilization of the supporting structure.

A duration of the resetting of about 10-20 seconds is found to be sufficient in order to provide necessary information for establishing the drift in the MEMS gyroscope.

In one embodiment of the method, the stabilization is automatically turned off when it is detected that the supporting structure is stationary, and turned on when it is detected that the supporting structure is about to move. When the supporting structure is stationary, an automatic reset may be performed. This will re-calibrate the current drift in the gyroscope.

The method may also comprise a further step of storing the values registered during each re-setting, and where these values stored over time are used for establishing temperature and the amount of drift as a function of time for a specific MEMS gyroscope used for optimizing calibration and performing automatic calibration. When such experience data are established, each specific MEMS gyroscope can be automatically calibrated without the need for manual calibration.

The present invention is also described by a system for providing precise stabilization of a supporting structure for weapons while firing and moving such.

The system comprises MEMS gyroscope for providing stabilization signals to driving means connected to the supporting structure in order to perform a continuous stabilization adjustments in three directions of movement of the supporting structure. It further comprises means for manually resetting the gyroscope before operation for establishing initial drift in the gyroscope in its current operating environment. The resetting comprises registering current temperature and drift in degrees in three directions as a function of time.

The system also comprises means for continuous calibration of said driving means for controlling said stabilization of the supporting structure by using initial drift.

As understood and also as mentioned above, the inventive method for providing precise stabilization of a supporting structure is not be considered to be restricted to weapons, but equally applies to all kinds of aiming devices where the object is to keep an aim stable even when the supporting structure that they are mounted to is moving.

A combination of two or more aiming devices is also applicable to be used with the inventive method and system. E.g. a supporting structure for a weapon, directive microphone and directive heat sensor is to be understood to be within the scope of protection as defined in the enclosed set of claims.

## Claims

1. Method for providing precise stabilization of a supporting structure for supporting at least one device used for aiming while the supporting structure is moving,
**characterized in that** it comprises the following steps:
- using MEMS gyroscope for providing stabilization signals to driving means connected to said supporting structure for continuous stabilization adjustments in at least one direction of movement of the supporting structure;
- resetting said gyroscope before operation for establishing a measure for initial drift in the gyroscope in its current operating environment, where the resetting comprises registering current temperature and drift in degrees in the at least one direction as a function of time, and
- using said initial drift for continuous calibration of the driving means for controlling said stabilization of the supporting structure.

2. Method according to claim 1, where the device used for aiming is a weapon.

3. Method according to claim 1, where the device used for aiming is a camera.

4. Method according to claim 1, where the device used for aiming is a directive microphone.

5. Method according to claim 1, where the device used for aiming is a directive heat sensor.

6. Method according to claim 1, where the device used for aiming is at least two of the following devices: a weapon, a camera, a directive microphone, and a directive heat sensor.

7. Method according to claim 1, where the resetting is performed manually over a time interval of 10-20 seconds.

8. Method according to claim 1, where the stabilization is automatically turned off when it is detected that the supporting structure is stationary, and turned on when is detected that the supporting structure is about to move.

9. Method according to claim 1, where an automatic reset of the gyroscope is performed when it is detected that the supporting structure is stationary.

10. Method according to claim 1, further comprising the step of storing said registered values for time, temperature and drift for each resetting, and using stored values for establishing amount of drift as a function of time for the specific MEMS gyroscope used for optimizing calibration and automatic calibration.

11. System for providing precise stabilization of a supporting structure for supporting at least one device used for aiming while the supporting structure is moving,
**characterized in that** it comprises:
- MEMS gyroscope for providing stabilization signals to driving means connected to said supporting structure for continuous stabilization adjustments in at least one directions of movement of the supporting structure;
- means for resetting said gyroscope before operation for establishing a measure for initial drift in the gyroscope in its current operating environment, where the resetting comprises registering current temperature and drift in degrees in at least one direction as a function of time, and
- means for continuous calibration of said driving means for controlling said stabilization of the supporting structure by using initial drift.
